# EUROPÄISCHE PATENTSCHRIFT

(11) **EP 2 061 281 B1**
(45) Veröffentlichungstag und Bekanntmachung des Hinweises auf die Patenterteilung: **26.08.2015**
(21) Anmeldenummer: 08168670.1
(22) Anmeldetag: 07.11.2008
(51) Int. Cl.: H04W 12/06, H04L 29/06, H04W 60/00, H04W 76/02

(54) **Verfahren zur Kommunikation mit einem Mobilfunknetz**
Method for communicating with a mobile radio network
Procédé de communication avec un réseau radio mobile

(30) Priorität: 13.11.2007 DE 102007054474
(43) Veröffentlichungstag der Anmeldung: 20.05.2009
(73) Patentinhaber: Vodafone Holding GmbH, 40213 Düsseldorf (DE)
(72) Erfinder: Bellack, René, 40219, Düsseldorf (DE)
(74) Vertreter: Vogel, Andreas

(56) Entgegenhaltungen:
- EP-A- 1 422 964
- WO-A-2006/079298
- DE-A1- 10 100 824
- DE-A1- 19 809 043
- US-A1- 2007 042 808
- WI-FI ALLIANCE: "Wi-Fi CERTIFIED for Wi-Fi Protected Setup: Easing the User Experience for Home and Small Office Wi-Fi Networks", WI-FI ALLIANCE, , 1 January 2007 (2007-01-01), pages 1-14, XP002568003, Retrieved from the Internet: URL:http://www.wi-fi.org/files/kc/20090123 _Wi-Fi__Protected_Setup.pdf [retrieved on 2010-02-11]

## Beschreibung

Die Erfindung betrifft ein Verfahren zur Kommunikation mit einem Mobilfunknetz, mit einem Handcomputer, der eine Kommunikationseinheit aufweist, wobei mittels der Kommunikationseinheit eine Kommunikationsverbindung zum Mobilfunknetz aufgebaut wird, ein Angabensatz von dem Handcomputer über die Kommunikationsverbindung an das Mobilfunknetz übermittelt wird, der Angabensatz zur Identifizierung des Handcomputers in dem Mobilfunknetz dient.

Mittels eines Mobiltelefons kann eine Kommunikationsverbindung in einem Mobilfunknetz aufgebaut werden. Zur Identifikation gegenüber dem Mobilfunknetz dient ein Angabensatz, der auf einer SIM-Karte (subscriber identity module) gespeichert und in dem Mobiltelefon integriert ist. Auf der SIM-Karte sind außerdem geheime Nummern und Algorithmen gespeichert, die ebenfalls zur Identifizierung des Benutzers genutzt werden. Diese Informationen gestatten es dem Mobilfunknetzbetreiber einen Benutzer und/oder das Mobiltelefon zu identifizieren und die erbrachten Leistungen korrekt abzurechnen.

Möchte ein Benutzer ein ihm fremdes Mobiltelefon nutzten, aber auf seine individuellen Benutzerdaten zugreifen, setzt dieses einen Einbau seiner SIM-Karte in das Mobiltelefon voraus. Denn nur so ist eine eindeutige Identifizierung des Benutzers gegenüber dem Mobilfunknetz möglich. Ein solcher Einbau der SIM-Karte ist allerdings sehr aufwendig. Des Weiteren ist die SIM-Karte eine Chip-Karte, die einen Prozessor mit Speicher aufweist. Beide Elemente reagieren sehr empfindlich auf äußere Einflüsse, weshalb ein Einbau der SIM-Karte schnell zu deren Zerstörung führen kann. Grundsätzlich sind solche Verfahren zum Beispiel aus der DE 101 00 824 A1 oder der EP 1 422 964 A1 bekannt.

Aufgabe der Erfindung ist es, ein Verfahren zur Kommunikation mit einem Mobilfunknetz zu schaffen, dass die oben genannten Nachteile vermeidet, insbesondere eine leichtere Nutzung eines Mobiltelefons ermöglicht und zusätzlich eine eindeutige Identifizierung des Benutzers gegenüber dem Mobilfunknetz erreicht.

Die Aufgabe wird erfindungsgemäß gelöst durch ein Verfahren zur Kommunikation mit einem Mobilfunknetz mit den Merkmalen gemäß des unabhängigen Patentanspruches 1 gelöst. In den abhängigen Ansprüchen sind bevorzugte Weiter-entwicklungen der Erfindung aufgeführt.

Erfindungsgemäß ist vorgesehen, dass zumindest ein erster Teil des Angabensatzes zu Beginn einer ersten Kommunikation des Handcomputers mit dem Mobilfunknetz über ein Eingabemittel eingegeben wird.

Im Rahmen des erfindungsgemäßen Verfahrens bedarf es keiner in den Handcomputer integrierten SIM-Karte mehr. Vielmehr genügt die Eingabe des ersten Teils des Angabensatzes um eine Identifizierung des Handcomputers gegenüber dem Mobilfunknetz auszuführen. Dieses hat den Vorteil, dass der Handcomputer nicht mehr nur von einem Benutzer verwendet werden kann. Insbesondere Firmen können eine Vielzahl unterschiedlicher Handcomputer ihren Mitarbeitern zur Verfügung stellen, welche sich jeweils individuell gegenüber dem Mobilfunknetz identifizieren. Es bedarf somit keiner Übergabe von SIM-Karten oder anderen Identifikationsträgern, um eine Nutzung der Handcomputer zu ermöglichen.

Als Mobilfunknetz im Sinne der Erfindung wird ein mobiles Funknetz bezeichnet. Bei einem solchen Funknetz können der Empfänger und prinzipiell auch der Sender mobil eingesetzt werden. Dabei umfasst die Kommunikation in einem Mobilfunknetz sämtliche Kommunikationen zu Wasser, zu Lande und in der Luft. Die Kommunikation reicht vom Privatbereich mit der schnurlosen Telefonie (CT und DECT) und Bluetooth, über alle Mobilfunknetze für die Sprachkommunikation (GSM, UMTS, 4G), den Bündelfunk, Betriebsfunk und Funkruf bis hin zur Satellitenkommunikation. Die technische Ausprägung der Mobilfunknetze umfasst die Leitungs- und Paketvermittlung, wie im Falle von GPRS, EDGE und UMTS. Je nachdem, ob vorrangig Sprachinformation, Daten oder Multimediainformationen übersandt werden sollen, können Mobilfunknetze anwendungsspezifisch optimiert sein.

Als Handcomputer wird im Rahmen der Patentanmeldung ein System bezeichnet, das Signale, insbesondere Daten oder Informationen, verarbeiten und in wenigstens eine Richtung übermitteln kann. Es kann sich dabei insbesondere um ein Mobiltelefon, also ein tragbares, batteriebetriebenes Funktelefon handeln oder auch um eine Datenkarte, die in einen Computer integriert werden kann. Entsprechende Datenkarten sind insbesondere als PCMCIA Steckkarten bekannt. Kommunikation ist im Sinne der Erfindung insbesondere eine Daten- oder Informationsübertragung. Diese kann auf eine Richtung beschränkt sein oder zwischen zwei Komponenten bidirektional erfolgen.

Eine erste vorteilhafte Ausführungsvariante des erfindungsgemäßen Verfahrens zeichnet sich dadurch aus, dass zumindest der erste Teil des Angabensatzes zu Beginn der ersten Kommunikation des Handcomputers mit dem Mobilfunknetz über das Eingabemittel manuell eingegeben wird. Der Benutzer muss folglich den ersten Teil des Angabensatzes per Hand über ein entsprechend ausgeformtes Eingabemittel, wie eine Tastatur oder einen Touch-Screen eingeben. Diese Art der Eingabe hat sich als einfach und unkompliziert herausgestellt, was die Benutzerfreundlichkeit des erfindungsgemäßen Verfahrens steigert.

Eine andere vorteilhafte Ausführungsvariante zeichnet sich dadurch aus, dass nach der Identifizierung des Handcomputers zumindest der erste Teil des Angabensatzes in dem Mobilfunknetz gespeichert wird. Nachdem der erste Teil des Angabensatzes von einem Benutzer über das Eingabemittel in den Handcomputer eingegeben wurde, versendet die Kommunikationseinheit über die Kommunikationsverbindung diesen ersten Teil des Angabensatzes an das Mobilfunknetz. Letzteres kann dann eine Identifizierung des Handcomputers durchführen. Zur Steigerung der Benutzerfreundlichkeit hat es sich als vorteilhaft erwiesen, wenn der übermittelte erste Teil in dem Mobilfunknetz gespeichert wird. Dazu können in dem Mobilfunknetz entsprechende Infrastrukturelemente, wie Datenspeicher etc., eingerichtet sein, auf denen die Informationen hinterlegt werden. Weiterhin hat es sich als vorteilhaft herausgestellt, wenn das Mobilfunknetz eine positive Identifizierung des Handcomputers speichert. Nachdem der erste Teil des Angabensatzes von dem Mobilfunknetz empfangen wurde, findet ein Abgleich dieses ersten Teiles mit in dem Mobilfunknetz hinterlegten Daten statt. Dadurch oder durch entsprechende Auswertealgorithmen ist es dem Mobilfunknetz möglich eine Identität des Handcomputers zu bestimmen. Diese positive Identifizierung wird dem Handcomputer zugeordnet und in den schon erwähnten Datenbanken gespeichert. Diese Ausführungsvariante kann dazu genutzt werden, dass bei einer zweiten Kommunikation der Angabensatz nicht eingegeben werden muss. Vielmehr reicht die einmalige positive Identifizierung des Handcomputers im Mobilfunknetz aus, sodass bei weiteren Kommunikationen es keiner erneuten Eingabe des ersten Teiles des Angabensatzes bedarf.

Aus Sicherheitsgründen hat es sich als vorteilhaft erwiesen, dass bei einer Deaktivierung des Handcomputers der erste Teil des Angabensatzes und/oder die positive Identifizierung des Handcomputers im Mobilfunknetz gelöscht wird. Unter einer Deaktivierung ist dabei ein Abstellen des Handcomputers oder ein Verlassen des vom Mobilfunknetz überdeckten Bereichs zu verstehen. In diesen Fällen besteht kein Kontakt mehr zwischen dem Handcomputer und dem Mobilfunknetz. Mittels entsprechender Verfahren ist es dem Mobilfunknetz möglich, diese Deaktivierung zu detektieren und entsprechend dem erfindungsgemäßen Verfahren zu reagieren. Dadurch ist sichergestellt, dass bei einem Diebstahl des Handcomputers nicht der zuletzt eingegebene Teil des Angabensatzes genutzt werden kann um zu kommunizieren. Vielmehr bedarf es einer erneuten Eingabe zumindest des ersten Teiles des Angabensatzes über das Eingabemittel. So ist sichergestellt, dass nach jeder Aktivierung, die auf eine vorhergehende Deaktivierung folgt, der Angabensatz zu Beginn der Kommunikation über das Eingabemittel insbesondere manuell eingegeben werden muss.

Im Rahmen der Erfindung hat es sich als vorteilhaft erwiesen, wenn der Angabensatz mehrteilig ist. Jeder der verschiedenen Teile des Angabensatzes kann dabei Informationen beinhalten, die es dem Mobilfunknetz einerseits ermöglichen den potenziellen Benutzer oder den Handcomputer eindeutig zu identifizieren sowie andererseits entsprechende Dienstleistungen für den Handcomputer bereitzustellen. Als besonders vorteilhaft hat es sich herausgestellt, wenn der Angabensatz mindestens einen ersten und einen zweiten Teil aufweist. So kann beispielsweise der erste Teil des Angabensatzes zur Identifikation des Handcomputers dienen, wohingegen der zweite Teil des Angabensatzes einen - normalerweise geheimen - Berechtigungscode enthält. Als erstrebenswert hat es sich erwiesen, wenn der erste Teil des Angabensatzes eine Telefonnummer (MSISDN) und der zweite Teil des Angabensatzes eine persönliche Identifikationsnummer (PIN-Code) enthält. Dadurch ist sichergestellt, dass nur ein Benutzer, der sowohl die Telefonnummer als auch die Identifikations-Nummer kennt, den Handcomputer zur Kommunikation im Mobilfunknetz nutzen kann. Selbstverständlich ist es von dem erfindungsgemäßen Verfahren auch umfasst, wenn der Angabensatz noch zusätzlich einen dritten oder vierten Teil aufweist, der weitere Identifikations- oder Nutzerinformationen beinhaltet.

Eine weitere vorteilhafte Ausgestaltung des erfindungsgemäßen Verfahrens zeichnet sich dadurch aus, dass zumindest ein Teil des Angabensatzes ein Handcomputercode und/oder einen Benutzercode enthält. In modernen GSM-Netzen kann in dem Handcomputercode beispielhaft eine eindeutige, gerätespezifische, elektronische Identifizierungsnummer des Handcomputers integriert sein. Diese Nummer besteht aus einem Typencode und einer fortlaufenden, herstellerabhängigen Fertigungsnummer. Die auch als IMEI bezeichnete Nummer ist in einer Gerätedatenbank gespeichert, welche vom Mobilfunknetz abgefragt werden kann, um so eine Lokalisierung von gestohlen gemeldeten Geräten zu ermöglichen. Des Weiteren wird vorteilhafterweise als Benutzercode eine internationale Mobilfunkteilnehmerkennung (IMSI) übersandt. Es handelt sich dabei um eine netzinterne Kennung, die der Identifikation des Teilnehmers bei der Vermittlung und Signalisierung eines Anrufers dient. Mit diesen Angaben ist es dem Mobilfunknetz möglich, den Handcomputer und den Benutzer eindeutig zur authentifizieren. Soll das Mobiltelefon nun von einem zweiten Benutzer verwendet werden, so ist erfindungsgemäß kein Tausch der SIM-Karte mehr nötig. Vielmehr wird zur Identifizierung des Handcomputers und/oder des Benutzers in dem Mobilfunknetz die dazu notwendigen Informationen mittels der Tastatur in den Handcomputer eingegeben.

Im Rahmen einer Ausführungsvariante des erfindungsgemäßen Verfahrens werden sämtliche Teile des Angabensatzes sequenziell von einem Benutzer eingegeben und an das Mobilfunknetz übermittelt. Innerhalb des Mobilfunknetzes findet dann eine Aufteilung des Angabensatzes in die verschiedenen Teile statt, um eine positive Identifizierung des Handcomputers sicherzustellen. Diese Vorgehensweise hat den Vorteil, dass es für einen Benutzer sehr einfach ist, die entsprechenden Informationen des Angabensatzes über das Eingabemittel, wie etwa eine Tastatur, in den Handcomputer einzugeben und über die Kommunikationsverbindung an das Mobilfunknetz zu senden. In einer davon abweichenden Ausführungsvariante wird nach der Eingabe und der Übermittlung des ersten Teils des Angabensatzes aus dem Mobilfunknetz eine Rückfrage übertragen. Diese Rückfrage soll den Benutzer bzw. den Handcomputer dazu animieren den zweiten Teil des Angabensatzes insbesondere manuell einzugeben. Diese aufgeteilte Eingabe des Angabensatzes ermöglicht eine einfachere Auswertung innerhalb des Mobilfunknetzes. Selbstverständlich kann zur Beantwortung der Rückfrage auch ein weiterer Teil des Angabensatzes oder eine im Handcomputer hinterlegte Information übertragen werden.

In einer weiteren Ausführungsvariante wird vor dem Beginn der ersten Kommunikation eine Nachricht an den Handcomputer übermittelt. Diese Nachricht kann beispielsweise eine Kurznachricht, wie etwa eine SMS (Short Message Service) sein, in welcher Informationen an den Handcomputer übermittelt werden. Bei diesen Informationen kann es sich um eine Telefonnummer handeln, über die der Handcomputer seine Kommunikation ausführen soll. Nach einem Erhalt dieser Nachricht kann der erste Teil des Angabensatzes einen Empfang der Nachricht bestätigen. Ein Benutzer nutzt folglich den ersten Teil des Angabensatzes um die in der Nachricht enthaltenen Informationen zu aktivieren bzw. zu nutzen. Dieses Verfahren hat sich insbesondere für Firmen als vorteilhaft erwiesen, welche wechselnde Telefonnummern den einzelnen Mitarbeitern zuweisen. Der entsprechende Mitarbeiter nutzt einen Handcomputer an den eine Telefonnummer übermittelt wird. Durch die Eingabe des ersten Teils des Angabensatzes - etwa seine Mitarbeiternummer - und der Übersendung dieses ersten Teils des Angabensatzes sowie der in der Nachricht enthaltenen Telefonnummer an das Mobilfunknetz findet eine Freischaltung statt. Im Anschluss daran ist es dem Mitarbeiter möglich, den Handcomputer zu nutzen, wobei auftretende Kosten über die Telefonnummer des Arbeitgebers abgerechnet werden. Durch die im Rahmen des ersten Teils des Angabensatzes erfolgte Identifizierung ist eine eindeutige Zuordnung der entstehenden Kosten zu dem entsprechenden Mitarbeiter möglich.

Im Rahmen einer weiteren vorteilhaften Ausgestaltungsvariante des Verfahrens kann ein Benutzer mehrere Angabensätze mittels des Handcomputers an das Mobilfunknetz übermitteln. So eröffnet sich für den Handcomputer bzw. einen Benutzer die Möglichkeit unter einer Mehrzahl von Telefonnummern erreichbar zu sein. Vorteilhafterweise können die Telefonnummern bzw. Angabensätze auch für unterschiedliche Mobilfunknetze gültig sein. Dadurch ist sichergestellt, dass der Handcomputer unabhängig von einer geografisch variierenden Infrastruktur unterschiedlicher Mobilfunknetze immer erreichbar ist. Zusätzlich hat es sich als vorteilhaft herausgestellt, dass nach der positiven Identifizierung der Handcomputer auf einen allgemeinen Informationsbereich und/oder einen spezifischen Informationsbereich zugreifen kann. In den beiden genannten Bereichen werden von dem Mobilfunknetz Informationen gespeichert, welche mittels des Handcomputers abgerufen werden können. Dabei zeichnen sich die allgemeinen Informationen dadurch aus, dass diese für jeden Benutzer eines beliebigen Handcomputers zugängig sind. So kann es sich bei diesen Informationen z. B. um Wetterdaten, Börseninformationen oder Nachrichten handeln. Im Gegensatz dazu sind in dem spezifischen Informationsbereich jene Daten hinterlegt, die nur für einen Handcomputer zugänglich sein sollen. Dabei kann es sich insbesondere um ein Telefonbuch oder einen persönlichen Kalender handeln.

In einer vorteilhaften Ausführungsvariante des erfindungsgemäßen Verfahrens handelt es sich bei dem Handcomputer um ein Mobiltelefon und bei dem Eingabemittel um eine Tastatur. Diese Tastatur kann in dem Mobiltelefon integriert sein. Folglich muss ein Nutzer des Handcomputers nur den ersten Teil des Angabensatzes manuell mittels der Tastatur in den Handcomputer eingeben. In einer anderen Ausführungsvariante ist der Handcomputer ein Mobiltelefon und das Eingabemittel ein Sensorbildschirm (Touch-Screen). Mittels einer Berührung dieses Sensorbildschirms mit einer Hand oder einem Stift ist es möglich Informationen in den Handcomputer einzugeben. In einer weiteren vorteilhaften Ausführungsvariante kann es sich bei dem Eingabemittel auch um einen Fingerabdrucksensor handeln. Ein Nutzer könnte sich gegenüber dem Handcomputer dadurch identifizieren, dass der Fingerabdruck des Benutzers gescannt und von dem Handcomputer ausgewertet wird. Handelt es sich um einen berechtigten Benutzer, kann dadurch eine Übersendung zumindest eines ersten Teils des Angabensatzes an das Mobilfunknetz ausgelöst werden. In einer anderen vorteilhaften Ausgestaltung handelt es sich bei dem Handcomputer um ein PCMCIA (Personal Computer Memory Card International Association) Modem und bei dem Eingabemittel um ein Keyboard. Der Handcomputer ist in diesem Ausführungsbeispiel eingebunden in eine Datenverarbeitungseinheit und dient als Modem zur Übertragung von digitalen Informationen.

Eine weitere Ausführungsvariante des erfindungsgemäßen Verfahrens zeichnet sich dadurch aus, dass das Eingabemittel eine Aktivierungstaste aufweist. Diese Aktivierungstaste wird im Rahmen der Eingabe des Angabensatzes betätigt. So kann durch die Aktivierungstaste ein Computerprogrammprodukt gestartet werden, welches für die Übermittlung des zumindest ersten Teils des Angabensatzes benötigt wird. Entsprechend hat es sich als vorteilhaft erwiesen, dass die Aktivierungstaste vor und/oder nach der Eingabe des zumindest ersten Teils des Angabensatzes betätigt wird. Zusätzlich kann die Betätigung der Aktivierungstaste eine Anfrage an das Mobilfunknetz aussenden, ob eine Übermittlung des Angabensatzes und eine damit einhergehende Identifizierung des Handcomputers im Mobilfunknetz überhaupt ausführbar ist. Falls der Handcomputer in verschiedenen Ländern der Erde genutzt wird, könnte es sein, dass die jeweiligen Mobilfunknetze nicht immer darauf vorbereitet sind, einen Angabensatz zu empfangen. Möglicherweise muss hier erst eine einleitende Kommunikation zwischen dem Handcomputer und dem Mobilfunknetz ausgeführt werden. Das Starten dieser einleitenden Kommunikation kann ebenfalls mit der Aktivierungstaste ausgelöst werden.

Eine weitere vorteilhafte Ausgestaltungsvariante zeichnet sich dadurch aus, dass der Handcomputer nach dem ersten Einschalten Signale aller aktiven Mobilfunknetze empfängt. Dieses kann insbesondere durch ein Abhören der auf dem Broadcast Control Channel gesendeten Informationen der Mobilfunknetze geschehen. In dieser Ausführungsvariante weist jedes Mobilfunknetz eine individuelle Kennung auf und jeder Angabensatz beinhalt eine Kennung eines Mobilfunknetzes. Nur in dem Fall, in dem die im Angabensatz enthaltene Kennung mit jener des Mobilfunknetzes übereinstimmt, wird der Angabensatz akzeptiert. Da der Handcomputer durch den BCCH (Broadcast Control Channel) über alle aktiven Mobilfunknetze informiert ist, kann der Handcomputer so an jedes der Netze den Angabensatz übertragen. Die Mobilfunknetze prüfen dann individuell und automatisch, ob der Angabensatz für eine Identifizierung gegenüber diesem Mobilfunknetz zu gebrauchen ist.

In einer weiteren Ausführungsform des erfindungsgemäßen Verfahrens kann der Handcomputer einen Datentransferkanal zu mindestens einer Sende- / Empfangseinheit aufbauen und die Sende- / Empfangseinheit die Kennung des Angabensatzes analysieren. In Abhängigkeit vom Ergebnis dieser Analyse kann die Sende- / Empfangseinheit eine Kommunikationsverbindung zu einem ersten oder einem zweiten Mobilfunknetz aufbauen.

Eine weitere vorteilhafte Ausführungsvariante des erfindungsgemäßen Verfahrens zeichnet sich dadurch aus, dass der Handcomputer ein Identifizierungselement aufweist, wobei mittels des Identifizierungselementes zumindest der erste Teil des Angabensatzes verschlüsselt wird. Das Identifizierungselement dient folglich dazu, die Datensicherheit bei der Kommunikation des Handcomputers mit dem Mobilfunknetz sicherzustellen. So können insbesondere Verschlüsselungsalgorithmen genutzt werden, um den Angabensatz oder Teile davon zu verschlüsseln. Dadurch ist sichergestellt, dass auch ein abgehörter Angabensatz nicht weiter genutzt werden kann. Vorteilhafterweise handelt es sich bei dem Identifizierungselement um eine Chip-Karte, die in den Handcomputer eingesetzt werden kann.

Die erfindungsgemäße Aufgabe wird ebenfalls gelöst durch einen Handcomputer zur Kommunikation in einem Mobilfunknetz, wobei der Handcomputer eine Kommunikationseinheit aufweist mittels der Kommunikationseinheit eine Kommunikationsverbindung zum Mobilfunknetz aufbaubar ist, ein Angabensatz von dem Handcomputer über die Kommunikationsverbindung an das Mobilfunknetz übermittelbar ist, der Angabensatz zur Identifizierung des Handcomputers in dem Mobilfunknetz dient. Erfindungsgemäß ist es vorgesehen, dass zumindest ein erster Teil des Angabensatzes zu Beginn einer ersten Kommunikation des Handcomputers mit dem Mobilfunknetz über ein Eingabemittel eingebbar ist. Vorteilhafterweise zeichnet sich dieser Handcomputer dadurch aus, dass er nach einem der Verfahren gemäß einem der vorgenannten Ansprüche betreibbar ist.

Zusätzlich wird die erfindungsgemäße Aufgabe durch ein System mit einem Handcomputer und zumindest einem Mobilfunknetz gelöst, wobei der Handcomputer nach einem der Verfahren gemäß den Ansprüchen 1 bis 15 betreibbar ist.

Weitere Maßnahmen, Vorteile, Effekte und Merkmale der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig. 1: einen erfindungsgemäß ausgestalteten Handcomputer in Kommunikation mit einem Mobilfunknetz,
- Fig.2: den Handcomputer in Kommunikation mit zwei Mobilfunknetzen und
- Fig.3: den Handcomputer in Kommunikation mit einer Sende- und Empfangseinheit.

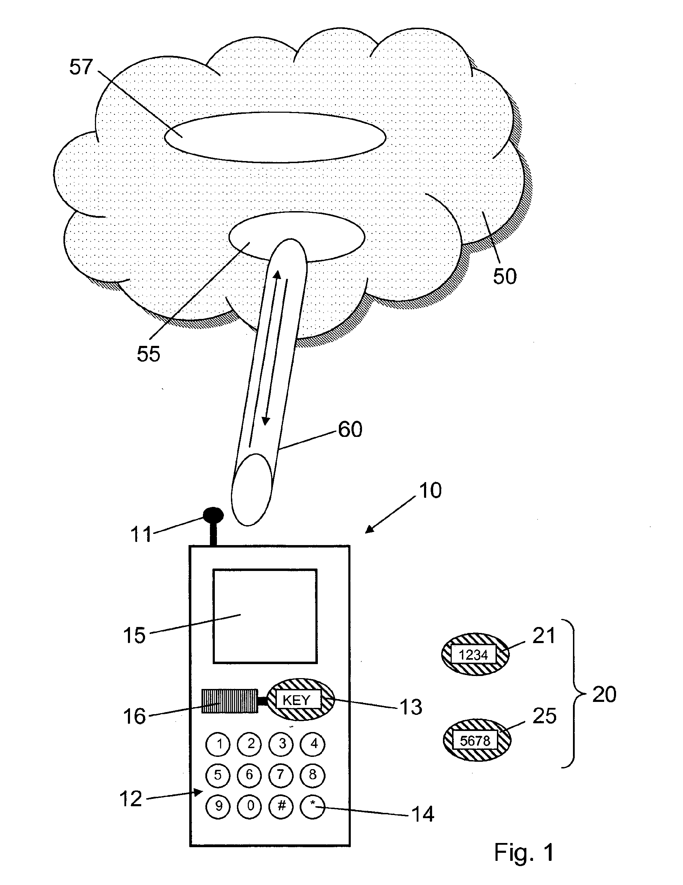

Zur Verdeutlichung des erfindungsgemäßen Verfahrens ist in Figur 1 ein Handcomputer 10 dargestellt. Im Rahmen des gezeigten Ausführungsbeispiels handelt es sich bei dem Handcomputer 10 um ein Mobiltelefon. Der Handcomputer 10 weist eine Kommunikationseinheit 11 auf, mit welcher der Handcomputer 10 eine Kommunikationsverbindung 60 zu einem Mobilfunknetz 50 aufbauen kann. In bekannten Mobilfunknetzen 50 ist es möglich von einem Handcomputer 10 auf einen anderen Handcomputer 10 Daten und/oder Sprachinformationen zu übertragen. Dabei stellt das Mobilfunknetz 50 die benötigte Infrastruktur zur Verfügung, um eine Kommunikationsverbindung 60 zwischen den beiden Handcomputern 10 aufzubauen.

Um eine Erreichbarkeit gegenüber Dritten zu erreichen und erbrachte Dienstleistungen abzurechnen, bedarf es einer Identifizierung des Handcomputers 10 bei seiner Einwahl in das Mobilfunknetz 50. Dazu kann von dem Handcomputer 10 ein Angabensatz 20 an das Mobilfunknetz 50 übermittelt werden. Dieser Angabensatz 20 wird in dem Mobilfunknetz 50 verarbeitet und ermöglicht eine eindeutige Identifizierung des Handcomputers 10 und/oder seines Benutzers. Bei bekannten Handcomputern hat es sich als nachteilig erwiesen, dass der Angabensatz 20 auf einer SIM-Karte gespeichert ist. Möchte ein Benutzer eine Anzahl von unterschiedlichen Handcomputern 10 nutzen, bedarf es dazu des Austausches der SIM-Karte. Dieses hat sich als sehr umständlich erwiesen und führte weiterhin schnell zu einer Beschädigung der SIM-Karte. Erfindungsgemäß ist es deshalb vorgesehen, dass zumindest ein erster Teil 21 des Angabensatzes 20 zu Beginn einer ersten Kommunikation des Handcomputers 10 mit dem Mobilfunknetz 50 über ein Eingabemittel 12 eingegeben wird.

In dem dargestellten Ausführungsbeispiel handelt es sich bei dem Eingabemittel 12 um eine Tastatur des Handcomputers 10. Folglich erfolgt die Eingabe des zumindest ersten Teiles 21 des Angabensatzes 20 manuell. Im Rahmen der Identifizierung kann zuerst nur der erste Teil 21 des Angabensatzes 20 in den Handcomputer 10 eingegeben werden und mittels der Kommunikationseinheit 11 an das Mobilfunknetz 50 übermittelt werden. Je nach Ausgestaltung findet im Mobilfunknetz 50 eine Identifizierung des Handcomputers statt. Zusätzlich kann nach der Übermittlung des ersten Teils 21 des Angabensatzes 20 eine Rückfrage aus dem Mobilfunknetz 50 stattfinden. Diese Rückfrage wird über die Kommunikationsverbindung 60 an den Handcomputer 10 übertragen und beispielsweise auf einem Anzeigemittel 15, wie etwa einem LCD-Display, angezeigt. Zur Beantwortung der Rückfrage muss der Benutzer einen zweiten Teil 25 des Angabensatzes 20 über das Eingabemittel 12 in den Handcomputer eingeben, damit dieser zweite Teil 25 an das Mobilfunknetz 50 übersandt wird. Der zweite Teil 25 des Angabensatzes 20 kann in Kombination mit dem ersten Teil 21 zu einer eindeutigen Identifizierung des Handcomputers 10 genutzt werden. Nachdem dieses geschehen ist, kann ein Benutzer den Handcomputer 10 zur Kommunikation mit dem Mobilfunknetz 50 nutzen. Beispielsweise können so Telefongespräche ausgeführt werden. Erfindungsgemäß enthält der erste Teil 21 des Angabensatzes 20 eine Telefonnummer (MSISDN). Diese Telefonnummer ermöglicht es dem Mobilfunknetz 50 ohne großen Aufwand eingehende Anrufe von Dritten an den jeweiligen Handcomputer 10 weiterzuleiten. Vorteilhafterweise handelt es sich in diesem Falle bei dem zweiten Teil 25 des Angabensatzes 20 um eine persönliche Identifizierungsnummer (PIN).

Der Handcomputer 10 weist als Bestandteil des Eingabemittels 12 eine Aktivierungstaste 14 auf. Die Aktivierungstaste 14 dient zur Vorbereitung der Eingabe zumindest des ersten Teils 21 des Angabensatzes 20. Ein Benutzer der über seinen Handcomputer 10 mit dem Mobilfunknetz 50 Kontakt aufnehmen möchte, betätigt die Aktivierungstaste 14, was zur Auslösung eines Computerprogrammproduktes führt. Letzteres führt zur Anzeige einer Abfrage auf dem Anzeigemittel 15, sodass der Benutzer darüber informiert ist, dass er nunmehr den ersten Teil 21 des Angabensatzes 20 eingeben kann. Nach dieser Eingabe kann zum Abschluss eine Bestätigung durch ein nochmaliges Betätigen der Aktivierungstaste 14 erfolgen. Diese zweite Betätigung der Aktivierungstaste 14 führt zu einer Übermittlung des ersten Teils 21 des Angabensatzes 20 an das Mobilfunknetz 50. Gleichfalls kann eine mehrmalige Betätigung der Aktivierungstaste 14 nötig sein, um den zweiten Teil 25 des Angabensatzes 20 an das Mobilfunknetz 50 zu übermitteln. Zusätzlich kann durch die Aktivierung des Computerprogrammproduktes bei der Betätigung der Aktivierungstaste 14 eine Überprüfung durchgeführt werden, ob die Identifizierung in dem Mobilfunknetz 50 überhaupt durchführbar ist. Dazu kann nach der Betätigung der Aktivierungstaste 14 eine Überprüfungskommunikation mit dem Mobilfunknetz 50 aufgebaut werden, innerhalb derer nur geklärt wird, ob das Mobilfunknetz 50 bereit für eine Identifizierung des Handcomputers 10 gemäß dem erfindungsgemäßen Verfahrens ist.

Nach einer positiven Identifizierung des Handcomputers 10 ist es diesem möglich, auf einen allgemeinen Informationsbereich 55 und/oder einen spezifischen Informationsbereich 57 zuzugreifen. Beide Informationsbereiche 55, 57 sind im Mobilfunknetz 50 hinterlegt. Dabei kann es sich um Datenbanken handeln, die auf Rechnereinheiten erstellt werden, welche Teil der Infrastruktur des Mobilfunknetzes 50 sind. Der allgemeine Informationsbereich 55 enthält Informationen die jedem berechtigten Benutzer zugänglich sind, wie etwa Wetterdaten oder Nachrichten. Im Gegensatz dazu sind die im spezifischen Informationsbereich 57 hinterlegten Informationen personalisiert auf den Handcomputer 10 bzw. seinen Benutzer. So können in den spezifischen Informationsbereich 57 Telefonnummern, ein Kalender oder Adressen gespeichert werden. Von Seiten des Mobilfunknetzes 50 können ebenfalls Daten in dem spezifischen Informationsbereich 57 hinterlegt werden. So ist es denkbar, dass das Mobilfunknetz 50 Daten über den Handcomputer 10 und/oder seinen Benutzer und/oder über die Zugriffsrechte im Mobilfunknetz 50 im spezifischen Informationsbereich 57 speichert.

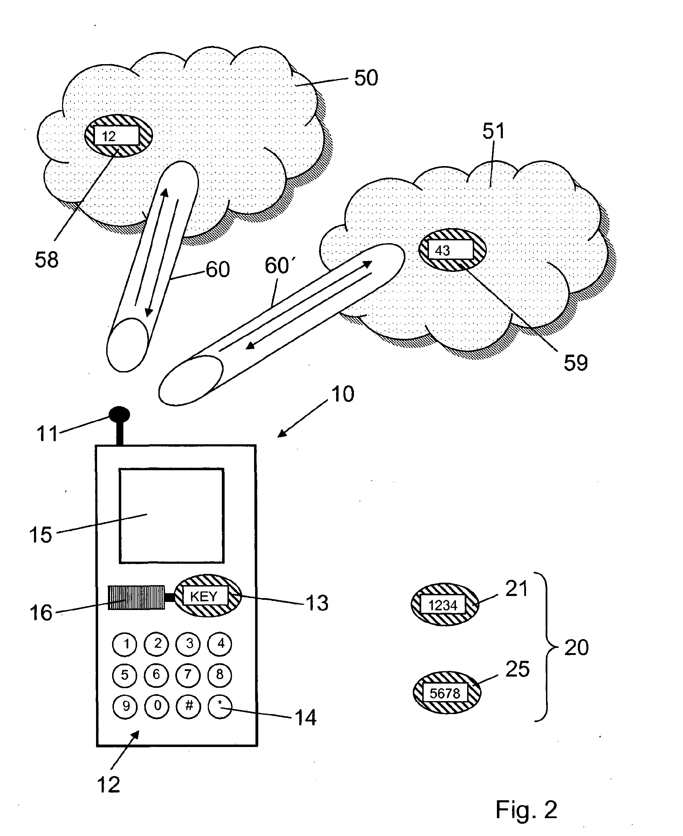

Im Rahmen des erfindungsgemäßen Verfahrens kann ein Benutzer eine Mehrzahl von Angabensätzen 20 sequenziell in den Handcomputer 10 eingeben. Jeder der Angabensätze 20 kann dabei eine individuelle Identifizierung des Handcomputer 10 und/oder des Benutzers ermöglichen. Durch die Eingabe einer Vielzahl von Angabensätzen 20 ist der Handcomputer 10 und/oder sein Benutzer über eine Vielzahl von Telefonnummern erreichbar. Zusätzlich ist es möglich, dass jede der Identifizierungen in einem unterschiedlichen Mobilfunknetz 50 geschieht. Dieses verdeutlicht Figur 2, welches den erfindungsgemäßen Handcomputer 10 sowie ein Mobilfunknetz 50 und ein zweites Mobilfunknetz 51 zeigt. Zu jedem der beiden Mobilfunknetze 50, 51 besteht eine Kommunikationsverbindung 60, 60'. Über diese Kommunikationsverbindung 60, 60' kann der Angabensatz 20 übermittelt werden. Möchte ein Benutzer den Handcomputer 10 zur Kommunikation nutzen, gibt er dazu zumindest den ersten Teil 21 des Angabensatzes 20 über das Eingabemittel 12 in den Handcomputer 10 ein. Ein Speicher 16 im Handcomputer 10 kann diesen ersten Teil 21 speichern und an das Mobilfunknetz 50, 51 übermitteln. Da eine Mehrzahl von Mobilfunknetzen 50, 51 zur Auswahl steht, kann jedes dieser Mobilfunknetze 50, 51 eine individuelle Kennung 58, 59 aufweisen. Gleichfalls weist jeder Teil 21, 25 des Angabensatzes 20 die Kennung 58, 59 des anzuwählenden Mobilfunknetzes 50 auf. Somit ist es möglich, dass der Handcomputer 10 eine Vorauswahl trifft, an welches der Mobilfunknetze 50, 51 der zumindest erste Teil 21 des Angabensatzes 20 übermittelt werden muss.

Um eine erhöhte Übertragungssicherheit zu erreichen kann der Handcomputer 10 eine Identifizierungselement 13 aufweisen, wobei mittels des Identifizierungselementes 13 zumindest der erste Teil 21 des Angabensatzes 20 verschlüsselt wird. Das Identifizierungselement 13 kann eine Rechnereinheit aufweisen, die einen Verschlüsselungsalgorithmus beinhaltet, welcher den zumindest ersten Teil 21 des Angabensatzes 20 durch mathematische Methoden derart verändert, dass kein direkter Zugriff mehr möglich ist. Somit würde selbst ein Abfangen des verschlüsselten ersten Teils 21 des Angabensatzes 20 nicht dazu führen, dass ein unbefugter Dritter diese Information nutzen kann, um selbst eine Kommunikationsverbindung 60 mit dem Mobilfunknetz 50 aufzubauen. Mittels im Mobilfunknetz 50 hinterlegten Schlüsseln ist eine Dekodierung des zumindest ersten Teils 21 des Angabensatz 20 möglich, sodass einer Identifizierung des Handcomputers 10 nichts im Weg steht.

Nach der positiven Identifizierung des Handcomputers 10 im Mobilfunknetz 50 können Daten und/oder Informationen ausgetauscht werden. Aus Gründen der Benutzerfreundlichkeit hat es sich als vorteilhaft erwiesen, dass das Mobilfunknetz 50 die positive Identifizierung und/oder zumindest den ersten Teil 21 des Angabensatzes 20 speichert. Dadurch bedarf es bei einer zweiten Kommunikation keiner erneuten Eingabe zumindest des ersten Teils 21 des Angabensatzes 20. Aus Gründen der Diebstahlsicherheit sollte allerdings nach einer Deaktivierung des Handcomputers 10 die positive Identifizierung und/oder zumindest der erste Teil 21 des Angabensatzes 20 im Mobilfunknetz 50 gelöscht werden. Somit bedarf es bei einer erneuten Aktivierung des Handcomputers 10 im Anschluss an eine Deaktivierung einer erneuten Eingabe zumindest des ersten Teils 21 des Angabensatzes 20. Dadurch ist sichergestellt, dass nur ein berechtigter Benutzer mittels des Handcomputers 10 kommuniziert.

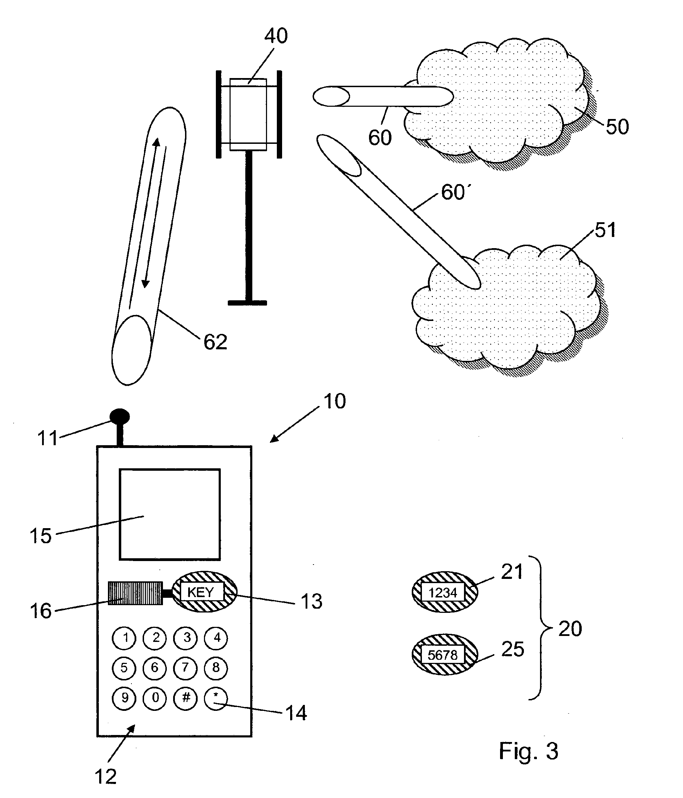

In Figur 3 ist eine weitere Ausführungsform des erfindungsgemäßen Systems aus dem Handcomputer 10 und zwei Mobilfunknetzen 50, 51 gezeigt. Im Unterschied zu der in Figur 2 gezeigten Anordnung kommuniziert hier der Handcomputer 10 zuerst über einen Datentransferkanal 62 mit einer Sende / Empfangseinheit 40. Letztere baut dann die Kommunikationsverbindungen 60, 60' mit den Mobilfunknetzen 50, 51 auf. Erfindungsgemäß ist vorgesehen, dass die Sende / Empfangseinheit 40 die Kennung 58, 59 des zumindest ersten Teils 21 des Angabensatzes 20 analysiert und in Abhängigkeit vom Ergebnis eine Kommunikationsverbindung 60, 60' zum ersten 50 oder zweiten Mobilfunknetz 51 aufbaut. Somit kann ein Benutzer eine beliebige Anzahl von Angabensätzen 20 eingeben, um eine Mehrzahl von möglichen Kommunikationsverbindungen 60, 60' zu den Mobilfunknetzen 50, 51 aufzubauen. Diese Angabensätze 20 werden als Ganzes an die Sende / Empfangseinheit 40 vermittelt. Erst dort findet die Analyse der Kennung 58, 59 statt, sodass dann eine entsprechende Übermittlung der Angabensätze 20 an die Mobilfunknetze 50, 51 geschieht.

### Bezuaszeichenliste

- 10: Handcomputer
- 11: Kommunikationseinheit
- 12: Eingabemittel
- 13: Identifizierungselement
- 14: Aktivierungstaste
- 15: Anzeigemittel
- 16: Speicher

- 20: Angabensatz
- 21: erster Teil des Angabensatzes
- 25: zweiter Teil des Angabensatzes

- 40: Sende / Empfangseinheit

- 50: Mobilfunknetz
- 51: zweites Mobilfunknetz
- 55: Bereich allgemeiner Informationen in 50
- 57: Bereich spezifischer Informationen in 50
- 58: Kennung des Mobilfunknetzes 50
- 59: Kennung des zweiten Mobilfunknetzes 51

- 60,60': Kommunikationsverbindung
- 62: Datentransferkanal

## Patentansprüche

1. Verfahren zur Kommunikation mit einem Mobilfunknetz (50),
mit einem Handcomputer (10), der eine Kommunikationseinheit (11) aufweist, wobei
mittels der Kommunikationseinheit (11) eine Kommunikationsverbindung (60) zum Mobilfunknetz (50) aufgebaut wird,
ein Angabensatz (20) von dem Handcomputer (10) über die Kommunikationsverbindung (60) an das Mobilfunknetz (50) übermittelt wird,
der Angabensatz (20) zur Identifizierung des Handcomputers (10) in dem Mobilfunknetz (50) dient, wobei
zumindest ein erster Teil (21) des Angabensatzes (20) zu Beginn einer ersten Kommunikation des Handcomputers (10) mit dem Mobilfunknetz (50) über ein Eingabemittel (12) eingegeben wird
**dadurch gekennzeichnet,**
**dass** der Angabensatz (20) mehrteilig ist, wobei der Angabensatz (20) den ersten Teil (21) zur Identifikation des Handcomputers (10) und einen zweiten Teil (25) aufweist, und wobei der erste Teil (21) des Angabensatzes (20) eine Telefonnummer (MSISDN) enthält, und wobei der zweite Teil (25) des Angabensatzes (20) eine persönliche Identifikationsnummer (PIN-Code) enthält, wobei die Telefonnummer eingehende Anrufe von Dritten an den Handcomputer weiterzuleiten ermöglicht.

2. Verfahren nach Anspruch 1,
**dadurch gekennzeichnet,**
**dass** zumindest der erste Teil (21) des Angabensatzes (20) zu Beginn der ersten Kommunikation des Handcomputers (10) mit dem Mobilfunknetz (50) über das Eingabemittel (12) manuell eingegeben wird.

3. Verfahren nach Anspruch 1 oder 2,
**dadurch gekennzeichnet,**
**dass** nach der Identifizierung des Handcomputers (10) zumindest der erste Teil (21) des Angabensatzes (20) in dem Mobilfunknetz (50) gespeichert wird, insbesondere dass das Mobilfunknetz (50) eine positive Identifizierung des Handcomputers (10) speichert.

4. Verfahren nach einem der vorhergehenden Ansprüche,
**dadurch gekennzeichnet,**
**dass** bei einer zweiten Kommunikation zumindest der erste Teil (21) des Angabensatzes (20) nicht eingegeben wird.

5. Verfahren nach einem der vorhergehenden Ansprüche,
**dadurch gekennzeichnet,**
**dass** bei einer Deaktivierung des Handcomputers (10) zumindest der erste Teil (21) des Angabensatzes (20) und/oder die positive Identifizierung des Handcomputers (10) im Mobilfunknetz (50) gelöscht wird, insbesondere dass bei einer Aktivierung des Handcomputers (10) im Anschluss an die Deaktivierung der Angabensatz (20) zu Beginn der Kommunikation über das Eingabemittel (12) eingegeben wird.

6. Verfahren nach einem der vorhergehenden Ansprüche,
**dadurch gekennzeichnet,**
**dass** zumindest ein Teil (21,25) des Angabensatzes (20) einen Handcomputercode und/oder einen Benutzercode enthält, wobei insbesondere der Handcomputercode eine international eindeutige Seriennummer (IMEI) des Handcomputers (10) und der Benutzercode eine Kundennummer (IMSI) enthält.

7. Verfahren nach einem der vorhergehenden Ansprüche,
**dadurch gekennzeichnet,**
**dass** nach der Eingabe und der Übermittlung zumindest des ersten Teiles (21) des Angabensatzes (20) aus dem Mobilfunknetz (50) eine Rückfrage übertragen wird, insbesondere dass zur Beantwortung der Rückfrage der zweite Teil (25) des Angabensatzes (20) insbesondere manuell eingegeben wird.

8. Verfahren nach einem der vorhergehenden Ansprüche,
**dadurch gekennzeichnet,**
**dass** eine Nachricht an den Handcomputer (10) übermittelt wird und mittels des ersten Teiles (21) des Angabensatzes (20) ein Empfang der Nachricht bestätigt wird, insbesondere dass mittels des ersten Teiles (21) des Angabensatzes (20) ein Inhalt der Nachricht aktiviert wird.

9. Verfahren nach einem der vorhergehenden Ansprüche,
**dadurch gekennzeichnet,**
**dass** der Handcomputer (10) ein Mobiltelefon ist und das Eingabemittel (12) eine Tastatur, insbesondere dass der Handcomputer (10) ein Mobiltelefon ist und das Eingabemittel (12) ein Sensorbildschirm, besonders bevorzugt dass der Handcomputer (10) ein PCMCIA (Personal Computer Memory Card International Association) Modem und das Eingabemittel (12) ein Keyboard ist, besonders bevorzugt dass das Eingabemittel (12) ein Fingerabdruck-Sensor ist.

10. Verfahren nach einem der vorhergehenden Ansprüche,
**dadurch gekennzeichnet,**
**dass** das Eingabemittel (12) eine Aktivierungstaste (14) aufweist, insbesondere dass die Aktivierungstaste (14) vor und/oder nach der Eingabe zumindest des ersten Teiles (21) des Angabensatzes (20) betätigt wird, besonders bevorzugt dass mit einem Betätigen der Aktivierungstaste (14) eine Überprüfung durchgeführt wird, ob die Identifizierung im Mobilfunknetz (50,51) ausführbar ist.

11. Verfahren nach einem der vorhergehenden Ansprüche,
**dadurch gekennzeichnet,**
**dass** der Handcomputer (10) nach einem ersten Einschalten Signale aller aktiven Mobilfunknetze (50,51) empfängt, insbesondere dass der Handcomputer (10) nach dem ersten Einschalten Signale aller aktiven Mobilfunknetze (50) über dem Broadcast Control Channel empfängt.

12. Verfahren nach einem der vorhergehenden Ansprüche,
**dadurch gekennzeichnet,**
**dass** jedes Mobilfunknetz (50) eine individuelle Kennung aufweist, zumindest ein Teil (21, 25)des Angabensatzes (20) eine Kennung des Mobilfunknetzes (50) beinhaltet, und nur bei identischer Kennung das Mobilfunknetz (50) die Übermittlung des Angabensatzes (20) akzeptiert, so dass je nach Kennung des Angabensatzes (25)
i) dieser über die Kommunikationsverbindung (60) an das Mobilfunknetz (50) übertragen wird, oder
ii) eine zweite Kommunikationsverbindung (60') mit einem zweiten Mobilfunknetz (51) aufgebaut und der Angabensatz (25) an das zweite Mobilfunknetz (51) übertragen wird.

13. Verfahren nach Anspruch 12,
**dadurch gekennzeichnet,**
**dass** der Handcomputer (10) einen Datentransferkanal (62) zu mindestens einer Sende-/ Empfangseinheit (40) aufbaut und die Sende-/ Empfangseinheit (40) die Kennung des Angabensatzes (20) analysiert und in Abhängigkeit vom Ergebnis eine Kommunikationsverbindung (60,60') zum ersten (50) oder zweiten Mobilfunknetz (51) aufbaut.

14. Verfahren nach einem der vorhergehenden Ansprüche,
**dadurch gekennzeichnet,**
**dass** der Handcomputer (10) ein Identifizierungselement (13) aufweist, wobei mittels des Identifizierungselements (13) zumindest der erste Teil (21) des Angabensatzes (20) verschlüsselt wird, insbesondere dass das Identifizierungselement (13) einen Verschlüsselungsalgorithmus aufweist, besonders bevorzugt dass das Identifizierungselement (13) eine Chipkarte ist.

## Claims

1. A method for communicating with a mobile phone network (50),
with a hand-held computer (10), which has a communication unit (11), wherein
a communications link (60) to the mobile phone network (50) is established by means of the communication unit (11),
a data set (20) is transmitted from the hand-held computer (10) to the mobile phone network (50) via the communications link (60),
the data set (20) serves to identify the hand-held computer (10) in the mobile phone network (50), wherein
at the beginning of a first communication of the hand-held computer (10) with the mobile phone network (50) at least one first part (21) of the data set (20) is entered using an input means (12),
**characterised in that**
the data set (20) has multiple parts, wherein the data set (20) has the first part (21) for identification of the hand-held computer (10) and a second part (25), and wherein the first part (21) of the data set (20) contains a telephone number (MSISDN), and wherein the second part (25) of the data set (20) contains a personal identification number (PIN-code), wherein the telephone number makes it possible to forward incoming calls from third parties to the hand-held computer (10).

2. The method according to claim 1, **characterised in that** at the beginning of the first communication of the hand-held computer (10) with the mobile phone network (50) at least the first part (21) of the data set (20) is entered manually via the input means (12).

3. The method according to claim 1 or 2, **characterised in that** following the identification of the hand-held computer (10), at least the first part (21) of the data set (20) is saved in the mobile phone network (50), in particular **in that** the mobile phone network (50) stores a positive identification of the hand-held computer (10).

4. The method according to one of the preceding claims, **characterised in that** in a second communication, at least the first part (21) of the data set (20) is not entered.

5. The method according to one of the preceding claims, **characterised in that** when the hand-held computer (10) is deactivated, at least the first part (21) of the data set (20) and/or the positive identification of the hand-held computer (10) in the mobile phone network (50) is deleted, in particular **in that** when the hand-held computer (10) is activated following the deactivation, the data set (20) is entered via the input means (12) at the beginning of the communication.

6. The method according to one of the preceding claims, **characterised in that** at least one part (21, 25) of the data set (20) contains a hand-held computer code and/or a user code, wherein in particular the hand-held computer code contains a unique international serial number (IMEI) of the hand-held computer (10) and the user code contains a customer number (IMSI).

7. The method according to one of the preceding claims, **characterised in that** following the entry and the transmission of at least the first part (21) of the data set (20) from the mobile phone network (50), a query is transmitted, in particular **in that** in order to answer the query the second part (25) of the data set (20) is entered in particular manually.

8. The method according to one of the preceding claims, **characterised in that** a message is transmitted to the hand-held computer (10) and receipt of the message is confirmed by means of the first part (21) of the data set (20), in particular **in that** a content of the message is activated by means of the first part (21) of the data set (20).

9. The method according to one of the preceding claims, **characterised in that** the hand-held computer (10) is a mobile telephone and the input means (12) is a keypad, in particular **in that** the hand-held computer (10) is a mobile telephone and the input means (12) is a touch-screen, particularly preferably **in that** the hand-held computer (10) is a PCMCIA (Personal Computer Memory Card International Association) modem and the input means (12) is a keyboard, particularly preferably **in that** the input means (12) is a fingerprint sensor.

10. The method according to one of the preceding claims, **characterised in that** the input means (12) comprises an activation key (14), in particular **in that** the activation key (14) is operated before and/or after the entry of at least the first part (21) of the data set (20), particularly preferably **in that** on operating the activation key (14) a verification is carried out as to whether identification in the mobile phone network (50, 51) is achievable.

11. The method according to one of the preceding claims, **characterised in that** following a first 'switch-on' the hand-held computer (10) receives signals from all active mobile phone networks (50, 51), in particular in that following a first 'switch-on' the hand-held computer (10) receives signals from all active mobile phone networks (50, 51) via the broadcast control channel.

12. The method according to one of the preceding claims, **characterised in that** each mobile phone network (50) has an individual identifier, at least one part (21, 25) of the data set (20) contains a mobile phone network (50) identifier, and the mobile phone network (50) only accepts the transmission of the data set (20) if the identifier is identical, so that depending on the identifier of the data set (25),
i) the latter is transmitted via the communications link (60) to the mobile phone network (50), or
ii) a second communications link (60') is established with a second mobile phone network (51) and the data set (25) is transmitted to the second mobile phone network (51).

13. The method according to claim 12, **characterised in that** the hand-held computer (10) establishes a data transfer channel (62) to at least one transmitting/receiving unit (40), and the transmitting/receiving unit (40) analyses the identifier of the data set (20) and in dependence of the result establishes a communications link (60, 60') with the first (50) or second mobile phone network (51).

14. The method according to one of the preceding claims, **characterised in that** the hand-held computer (10) comprises an identification element (13), wherein at least the first part (21) of the data set (20) is encrypted by means of the identification element (13), in particular **in that** the identification element (13) comprises an encryption algorithm, particularly preferably **in that** the identification element (13) is a chip card.

## Revendications

1. Procédé pour la communication avec un réseau de téléphonie mobile (50),
avec un ordinateur de poche (10) qui présente une unité de communication (11), dans lequel
une liaison de communication (60) avec le réseau de téléphonie mobile (50) est établie au moyen de l'unité de communication (11),
un jeu de données (20) étant transmis par l'ordinateur de poche (10), via la liaison de communication (60), à l'attention du réseau de téléphonie mobile (50),
le jeu de données (20) servant à l'identification de l'ordinateur de poche (10) dans le réseau de téléphonie mobile (50), dans lequel
au moins une première partie (21) du jeu de données (20) est saisie, par l'intermédiaire d'un moyen de saisie (12), au début d'une première communication de l'ordinateur de poche (10) avec le réseau de téléphonie mobile (50),
**caractérisé en ce que**
le jeu de données (20) est en plusieurs parties, dans lequel le jeu de données (20) présente la première partie (21) pour l'identification de l'ordinateur de poche (10) et une deuxième partie (25), et dans lequel la première partie (21) du jeu de données (20) contient un numéro de téléphone (MSISDN), et dans lequel la deuxième partie (25) du jeu de données (20) contient un numéro d'identification personnel (code PIN), dans lequel le numéro de téléphone permet de retransmettre les appels entrants de tiers à l'ordinateur de poche.

2. Procédé selon la revendication 1, **caractérisé en ce qu'**au moins la première partie (21) du jeu de données (20) est saisie manuellement au début de la première communication de l'ordinateur de poche (10) avec le réseau de téléphonie mobile (50) par l'intermédiaire du moyen de saisie (12).

3. Procédé selon la revendication 1 ou 2, **caractérisé en ce qu'**après l'identification de l'ordinateur de poche (10), au moins la première partie (21) du jeu de données (20) est sauvegardée dans le réseau de téléphonie mobile (50), en particulier, **en ce que** le réseau de téléphonie mobile (50) sauvegarde une identification positive de l'ordinateur de poche (10).

4. Procédé selon l'une des revendications précédentes, **caractérisé en ce que**, pour une deuxième communication, au moins la première partie (21) du jeu de données (20) n'est pas saisie.

5. Procédé selon l'une des revendications précédentes, **caractérisé en ce que**, lors d'une désactivation de l'ordinateur de poche (10), au moins la première partie (21) du jeu de données (20) et/ou l'identification positive de l'ordinateur de poche (10) est supprimée dans le réseau de téléphonie mobile (50), en particulier **en ce que**, lors d'une activation de l'ordinateur de poche (10) suite à la désactivation, le jeu de données (20) est saisi au début de la communication par l'intermédiaire du moyen de saisie (12).

6. Procédé selon l'une des revendications précédentes, **caractérisé en ce qu'**au moins une partie (21, 25) du jeu de données (20) contient un code d'ordinateur de poche et/ou un code utilisateur, dans lequel en particulier le code d'ordinateur de poche contient un numéro de série univoque international (IMEI) de l'ordinateur de poche (10) et le code utilisateur contenant un numéro de client (IMSI).

7. Procédé selon l'une des revendications précédentes, **caractérisé en ce qu'**après la saisie et la transmission d'au moins la première partie (21) du jeu de données (20), une question est retransmise à partir du réseau de téléphonie mobile (50), en particulier **en ce que**, pour répondre à la question, la deuxième partie (25) du jeu de données (20) est saisie, en particulier manuellement.

8. Procédé selon l'une des revendications précédentes, **caractérisé en ce qu'**un message est transmis à l'ordinateur de poche (10) et **en ce qu'**au moyen de la première partie (21) du jeu de données (20), une réception du message est confirmée, en particulier **en ce qu'**au moyen de la première partie (21) du jeu de données (20), un contenu du message est activé.

9. Procédé selon l'une des revendications précédentes, **caractérisé en ce que** l'ordinateur de poche (10) est un téléphone mobile et **en ce que** le moyen de saisie (12) est un clavier, en particulier **en ce que** l'ordinateur de poche (10) est un téléphone mobile et le moyen de saisie (12) un écran tactile, de manière particulièrement préférée, **en ce que** l'ordinateur de poche (10) est un modem PCMCIA (Personal Computer Memory Card International Association) et le moyen de saisie (12) un clavier, de manière particulièrement préférée, **en ce que** le moyen de saisie (12) est un capteur d'empreintes digitales.

10. Procédé selon l'une des revendications précédentes, **caractérisé en ce que** le moyen de saisie (12) présente une touche d'activation (14), en particulier, **en ce que** la touche d'activation (14) est activée avant et/ou après la saisie au moins de la première partie (21) du jeu de données (20), de manière particulièrement préférée, **en ce qu'**avec un actionnement de la touche d'activation (14) on effectue une vérification pour savoir si l'identification peut être exécutée dans le réseau de téléphonie mobile (50, 51).

11. Procédé selon l'une des revendications précédentes, **caractérisé en ce que** l'ordinateur de poche (10), après une première mise en marche, réceptionne des signaux de tous les réseaux de téléphonie mobile (50, 51) actifs, en particulier, **en ce que** l'ordinateur de poche (10), après la première mise en marche, réceptionne des signaux de tous les réseaux de téléphonie mobile (50, 51) actifs par l'intermédiaire du Broadcast Control Channel.

12. Procédé selon l'une des revendications précédentes, **caractérisé en ce que** chaque réseau de téléphonie mobile (50) présente un indicatif individuel, au moins une partie (21, 25) du jeu de données (20) contenant un indicatif du réseau de téléphonie mobile (50), et le réseau de téléphonie mobile (50) acceptant la transmission du jeu de données (20) seulement en cas d'indicatif identique, de sorte qu'en fonction de l'indicatif du jeu de données (25)
i) celui-ci est retransmis via la liaison de communication (60) à l'attention du réseau de téléphonie mobile (50), ou
ii) une deuxième liaison de communication (60') étant établie avec un deuxième réseau de téléphonie mobile (51) et le jeu de données (25) étant retransmis au deuxième réseau de téléphonie mobile (51).

13. Procédé selon la revendication 12, **caractérisé en ce que** l'ordinateur de poche (10) établit un canal de transfert de données (62) vers au moins une unité d'émission/réception (40) et **en ce que** l'unité d'émission/réception (40) analyse l'indicatif du jeu de données (20) et établit une liaison de communication (60, 60') avec le premier (50) ou le deuxième réseau de téléphonie mobile (51) en fonction du résultat.

14. Procédé selon l'une des revendications précédentes, **caractérisé en ce que** l'ordinateur de poche (10) présente un élément d'identification (13), dans lequel, grâce à l'élément d'identification (13), au moins la première partie (21) du jeu de données (20) est codée, en particulier, **en ce que** l'élément d'identification (13) présente un algorithme de codage, de manière particulièrement préférée, **en ce que** l'élément d'identification (13) est une carte à puce.
